# EUROPÄISCHE PATENTSCHRIFT

(11) **EP 2 966 323 B1**
(45) Veröffentlichungstag und Bekanntmachung des Hinweises auf die Patenterteilung: **28.08.2019**
(21) Anmeldenummer: 15175763.0
(22) Anmeldetag: 07.07.2015
(51) Int. Cl.: F16K 1/36, F16F 1/32, F16K 31/06, B21D 53/00, B21D 53/88, F16F 1/02, B21D 1/00, B21D 28/02, B21D 35/00

(54) **VERFAHREN ZUR HERSTELLUNG EINER MÄANDERFEDER UND MÄANDERFEDER**
FABRICATION METHOD AND MEANDER SPRING
PROCÉDÉ DE FABRICATION D'UN RESSORT À MÉANDRES ET RESSORT À MÉANDRES

(30) Priorität: 08.07.2014 DE 102014109517
(43) Veröffentlichungstag der Anmeldung: 13.01.2016
(73) Patentinhaber: SVM Schultz Verwaltungs-GmbH & Co. KG, 87700 Memmingen (DE)
(72) Erfinder: Müller, Robert, 86842 Türkheim (DE); Schweikert, Mario, 87700 Memmingen (DE)
(74) Vertreter: OlbrichtPfister

(56) Entgegenhaltungen:
- EP-A1- 0 683 445
- DE-A1- 10 312 977
- DE-A1- 19 610 692
- DE-A1-102013 203 711
- GB-A- 2 345 120

## Beschreibung

Die Erfindung betrifft ein Verfahren zur Herstellung einer Mäanderfeder, eine Mäanderfeder sowie ein Magnetventil welches eine solche Mäanderfeder aufweist.

Gattungsgemäße Mäanderfedern dienen in gattungsgemäßen, insbesondere elektromagnetisch betätigten Magnetventilen insbesondere dazu, Austrittsöffnungen einer Ventilkammer steuerbar zu verschließen. Hierzu tragen bekannte Mäanderfedern zum Beispiel separate Dichtelemente (die aus anderem Material wie die Mäanderfeder bestehen), die außenliegend an einer Anzahl von weiter innen liegenden Federarmen angeordnet sind. Die Federarme werden typischerweise mit einer Ankerstange verbunden, welche z. B. wie in einem Elektromagneten mittels einer Wicklung und einer Druckfeder auf und ab bewegbar ist. Damit können durch Bestromung oder Nichtbestromung der Wicklung die Austrittsöffnungen verschlossen oder freigegeben werden.

Gattungsgemäße Mäanderfedern werden typischerweise durch bekannte zerspanende Verfahren hergestellt. Auf die so hergestellte Mäanderfeder werden dann die separaten Dichtelemente angeordnet, z. B. aufgeklebt. Es hat sich gezeigt, dass derartige Verfahren sehr aufwändig sind. Außerdem ist die Auswahl an verwendbaren Federstahlqualitäten eingeschränkt.

Das Dokument GB 2 345 120 A offenbart ein Ventilelement für ein Magnetventil und ein Verfahren für dessen Herstellung. Dabei wird ein Dichtbereich durch eine außenliegende Ringdichtung aus elastischem Material gebildet. Dies erfordert einen zusätzlichen Arbeitsschritt.

Das Dokument DE 103 12 977 A1 offenbart ein Federelement, welches lediglich Anlageabschnitte, jedoch keinen Dichtbereich aufweist.

Das Dokument DE 10 2013 203 711 A1 offenbart eine Ausführung mit einem separaten Ventilschließring. Dieser wird durch eine Blattfeder mit einem Führungsstößel verbunden.

Es ist deshalb eine Aufgabe der Erfindung, ein Verfahren zur Herstellung einer Mäanderfeder bereitzustellen, welches anders, beispielsweise einfacher, durchführbar ist. Es sind des Weiteren Aufgaben der Erfindung, eine entsprechende Mäanderfeder sowie ein Magnetventil mit einer solchen Mäanderfeder bereitzustellen.

Dies wird erfindungsgemäß durch ein Verfahren nach Anspruch 1, eine Mäanderfeder nach Anspruch 3 und ein Magnetventil nach Anspruch 13 erreicht. Vorteilhafte Ausgestaltungen sind beispielsweise in den jeweiligen Unteransprüchen enthalten.

Die Erfindung betrifft ein Verfahren zur Herstellung einer Mäanderfeder, insbesondere zur Verwendung als Dichtelement für ein Magnetventil, wobei die Mäanderfeder einen radial außenliegenden Dichtbereich sowie eine Anzahl von radial innenliegenden Federarmen aufweist. Erfindungsgemäß ist vorgesehen, dass die Mäanderfeder ausgestanzt wird. Insbesondere kann dies bedeuten, dass der/die Federarm/e ausgestanzt wird/werden. Der außenliegende Dichtbereich wird während des Stanzvorgangs pressend oder formgebend strukturiert. Dies ermöglicht die Ausbildung eines Dichtbereichs in einem Arbeitsgang.

Das erfindungsgemäße Verfahren ist deutlich einfacher und damit auch schneller und kostengünstiger durchführbar als bekannte Verfahren, welche auf zerspanender Formgebung beruhen. In einem Bearbeitungsschritt wird die federnde Eigenschaft und auch die abdichtende Eigenschaft in das Element eingeprägt, welches als Vormaterial zum Beispiel eine Metallscheibe ist. Die hierdurch entstehende Mäanderfeder hat eine doppelte Funktion, nämlich eine federnde und eine dichtende. Dieser integrative Schritt spart nicht nur bei der Herstellung der Mäanderfeder Zeit, sondern er vermeidet auch die Verwendung von separat anzuordnenden Dichtmaterial, das nach den Lösungen im Stand der Technik auf die zerspanend hergestellte Mäanderfeder aufzukleben war. Damit kombiniert der erfindungsgemäße Vorschlag eine schnellere Herstellung mit einer Schonung von Ressourcen. Weiter ist vorteilhaft, dass bei Verwendung einer gleichmäßig dicken Scheibe als Rohmaterial automatisch eine gleichmäßig dicke Mäanderfeder erhalten wird. Außerdem können für das Verfahren des Stanzens Federstahlqualitäten verwendet werden, welche in zerspanenden Verfahren nicht verwendbar sind.

Bevorzugt wird die Mäanderfeder nach dem Stanzen vergütet. Dies ermöglicht eine verbesserte Resistenz der Mäanderfeder beispielsweise gegen mechanische oder chemische Beanspruchung.

Besonders bevorzugt wird der Dichtbereich während des Stanzvorgangs so strukturiert, dass er eine randseitige Dichtkontur, bevorzugt ausgebildet mittels Dichtlippen, erhält. Derartige Dichtlippen sind besonders vorteilhaft zum Verschließen von Austrittsöffnungen einer Ventilkammer an einem Magnetventil, da sie die Austrittsöffnungen umschließen und ein Eindringen von zu steuerndem Medium wie beispielsweise Hydrauliköl verhindern können.

Die Erfindung betrifft des Weiteren eine Mäanderfeder, insbesondere zur Verwendung als Dichtelement für ein Magnetventil, welche mittels eines erfindungsgemäßen Verfahrens hergestellt wurde. Damit werden die weiter oben bereits beschriebenen Vorteile des Verfahrens für eine Mäanderfeder erreicht. Hinsichtlich des Verfahrens kann auf alle weiter oben beschriebenen Ausführungen und Varianten zurückgegriffen werden. Erläuterte Vorteile gelten entsprechend.

Die Erfindung betrifft des Weiteren eine Mäanderfeder, insbesondere zur Verwendung als Dichtelement für ein Magnetventil, welche einen radial außenliegenden Dichtbereich, bevorzugt in Form eines Dichtrings, ausbildet, sowie eine Anzahl von radial innenliegenden Federarmen aufweist. Erfindungsgemäß ist vorgesehen, dass die Mäanderfeder entlang einiger oder aller Kanten Stanzkanten aufweist, wobei insbesondere die Federarme jeweils durch Stanzkanten begrenzt sind.

Die beschriebene Ausführung einer Mäanderfeder mit Stanzkanten ermöglicht insbesondere eine einfache Herstellung der Mäanderfeder mittels Stanzen. Dabei werden typischerweise derartige Stanzkanten ausgebildet, welche an der Mäanderfeder erkennbar sind. Beispielsweise kann die Mäanderfeder mit einem erfindungsgemäßen Verfahren hergestellt werden.

Die Mäanderfeder weist bevorzugt eine konstante Materialstärke auf, besonders bevorzugt zwischen 1,5 mm und 2,5 mm und insbesondere bevorzugt 2 mm. Diese Werte haben sich für typische Anwendungen, insbesondere in einem Elektromagneten, als vorteilhaft erwiesen.

Bevorzugt ist die Mäanderfeder aus Stahl, bevorzugt aus nichtrostendem authentischem Chrom-Nickel-Stahl und besonders bevorzugt aus 1.4310-Stahl ausgebildet. Diese Materialien haben sich als besonders vorteilhaft erwiesen. Es sei jedoch erwähnt, dass auch andere Werkstoffe, beispielsweise diverse Edelstahl-Qualitäten, Federstähle oder andere chemisch und/oder mechanisch stabile Stähle verwendet werden können.

Die Mäanderfeder ist bevorzugt aus einem weichen Federstahl hergestellt. Dieser hat sich für typische Anwendungen als vorteilhaft erwiesen.

Die Mäanderfeder weist bevorzugt ferner einen Innenring auf, auf welchen die Federarme radial innen zulaufen und welcher eine Bohrung zum Anbringen der Mäanderfeder an einer Halterung, wie z. B. einer Ankerstange eines Magnetventils, aufweist. Mittels eines solchen Innenrings kann die Mäanderfeder beispielsweise vorteilhaft an einer Ankerstange eines Elektromagneten befestigt werden.

Bevorzugt sind die Federarme im Wesentlichen spiralförmig angeordnet. Dies ermöglicht eine vorteilhafte Ausbildung einer Federkraft.

Bevorzugt weist die Mäanderfeder drei, vier, fünf oder mehr als fünf Federarme auf. Mit derartigen Werten lassen sich gewünschte Federwirkungen vorteilhaft erreichen.

Bevorzugt weisen die Federarme eine jeweilige Breite auf, welche größer oder gleich ihrer Dicke ist. Dies ermöglicht eine vorteilhafte Flexibilität in einer gewünschten Richtung. Die Breite wird dabei insbesondere in einer Ebene gemessen, in welcher sich die Mäanderfeder am weitesten räumlich ausbreitet. Die Dicke wird insbesondere in einer quer dazu stehenden Richtung gemessen.

Zwischenräume zwischen den Federarmen weisen bevorzugt eine jeweilige Breite auf, welche größer oder gleich der Dicke der Federarme ist. Es hat sich gezeigt, dass damit gewünschte Federwirkungen erreicht werden können.

Weiter bevorzugt weisen die Federarme und/oder Zwischenräume zwischen den Federarmen eine jeweilige Breite auf, welche mindestens 90 % der Dicke der Federarme beträgt. Dies hat sich als vorteilhaft erwiesen.

Die Federarme sind bevorzugt derart konstruiert, dass über den Verlauf eines jeweiligen Federarms eine gleichmäßige Belastung bei einem auf den Dichtbereich ausgeübten Überhub auftritt. Damit wird insbesondere eine gleichmäßige Belastung des jeweiligen Federarms erreicht, so dass ein früher Bruch eines einzelnen Abschnitts aufgrund übermäßiger Belastung vermieden wird. Unter einem Überhub wird dabei insbesondere verstanden, dass die Mäanderfeder mittig so weit zu einem Joch hin gezogen wird, dass ein außenliegender Dichtbereich der Mäanderfeder unter Ausübung eines durch die Mäanderfeder vermittelten Drucks an zumindest einer abzudichtenden Öffnung anliegt.

Der Dichtbereich ist bevorzugt von umlaufenden Dichtlippen begrenzt. Damit kann eine vorteilhafte Dichtwirkung beim Abdichten einer abzudichtenden Öffnung erreicht werden. Insbesondere kann durch Dichtlippen der Weg vergrößert werden, den ein Medium zurücklegen müsste, um die Dichtung zu überwinden.

Die Dichtlippen sind bevorzugt mittels Tiefziehen und/oder Pressen bzw. Kaltverformung ausgebildet. Diese Verfahren haben sich in der Praxis als vorteilhaft erwiesen. Beispielsweise ist das Pressen mit einem Stanzvorgang, mittels welchem die Mäanderfeder bevorzugt hergestellt wird, vorteilhaft kombinierbar.

Bevorzugt ist der Dichtbereich als Dichtring ausgebildet. Dies ermöglicht eine umlaufende Abdichtung, beispielsweise zur Abdichtung mehrerer Öffnungen.

Die Erfindung betrifft des Weiteren ein Magnetventil, aufweisend
- ein Joch,
- einen Magnetkern,
- einen Anker,
- eine Wicklung, welche einen den Anker aufnehmenden Ankerraum zumindest teilweise umgibt,
- eine Ankerstange, welche ein erstes Längsende und ein zweites Längsende aufweist,
- wobei die Ankerstange an ihrem ersten Längsende mit dem Anker verbunden ist, und der Anker zusammen mit der Ankerstange mittels der mit elektrischem Strom beaufschlagbaren Wicklung zwischen zumindest einer geschlossenen Endpositionen und einer offenen Endposition des Magnetventils bewegbar ist, sowie
- eine Ventilkammer mit zumindest einem Einlass und zumindest einem Auslass.

Ein solches Magnetventil wird auch als Elektromagnetventil beschrieben.

Erfindungsgemäß ist auf der Ankerstange eine erfindungsgemäße Mäanderfeder derart aufgebracht, dass sie sich mit der Ankerstange bewegt, und dass sie in der geschlossenen Endposition den Auslass verschließt und in der offenen Endposition den Auslass freigibt.

Mittels des erfindungsgemäßen Magnetventils können die weiter oben mit Bezug auf die erfindungsgemäße Mäanderfeder erwähnten Vorteile für ein Magnetventil nutzbar gemacht werden. Hinsichtlich der Mäanderfeder kann auf alle weiter oben erwähnten Ausführungen und Varianten zurückgegriffen werden. Erläuterte Vorteile gelten entsprechend.

Insbesondere ermöglicht das erfindungsgemäße Magnetventil eine vorteilhafte Steuerung eines Mediums wie beispielsweise eines Hydrauliköls, wobei die Kosten des Magnetventils durch die vorteilhafte Verwendung des Stanzens zur Herstellung der Mäanderfeder gesenkt werden können.

Dem Dichtbereich der Mäanderfeder ist bevorzugt ein den Auslass umgebendes Gegenstück zugeordnet, welches eine Dichtkontur aufweist, welche bevorzugt angedreht und/oder geformt ist. Dies ist insbesondere dann vorteilhaft, wenn die Mäanderfeder glatt ausgeführt ist oder ausgeführt sein soll, so dass auf spezielle Verarbeitungsverfahren oder Verarbeitungsschritte zur Herstellung eines strukturierten Dichtbereichs verzichtet werden kann. Die Dichtkontur sorgt dabei typischerweise dafür, dass ein Weg, welchen ein zu steuerndes Medium zur Überwindung der Dichtung zurücklegen muss, verlängert wird.

Besonders bevorzugt weist die Dichtkontur umlaufende Dichtlippen auf. Diese haben sich als besonders wirkungsvoll erwiesen.

Die Mäanderfeder ist bevorzugt flach bzw. in sich eben ausgebildet. Dies ermöglicht eine besonders einfache und damit günstige Herstellung.

Es wird insbesondere darauf hingewiesen, dass alle mit Bezug auf die Mäanderfeder und/oder das Magnetventil beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar sind und als mitoffenbart gelten. Gleiches gilt auch in umgekehrter Richtung, das bedeutet, nur mit Bezug auf das Verfahren genannte, bauliche also vorrichtungsgemäße Merkmale können auch im Rahmen der Vorrichtungsansprüche berücksichtigt und beansprucht werden und zählen ebenfalls zur Offenbarung.

In der Zeichnung ist die Erfindung insbesondere in Ausführungsbeispielen schematisch dargestellt. Es zeigen:
- Fig. 1: ein Magnetventil,
- Fig. 2a und 2b: eine Mäanderfeder gemäß einer nicht unter die Ansprüche fallenden Ausführungsform,
- Fig. 3a und 3b: eine Mäanderfeder gemäß einem Ausführungsbeispiel.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

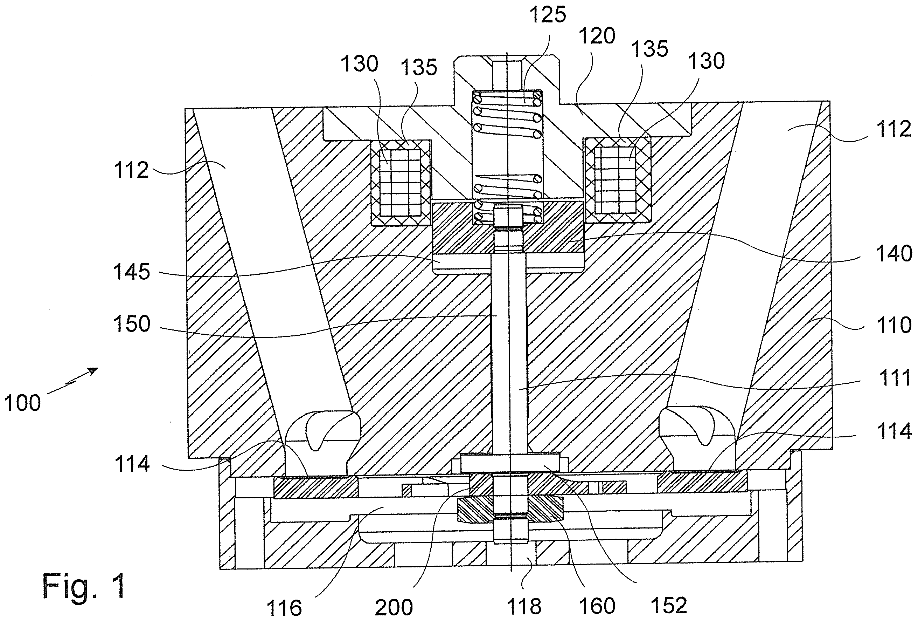

Figur 1 zeigt ein Magnetventil 100, welches elektromagnetisch betätigbar ist.

Das Magnetventil 100 weist ein Joch 110 auf, in bzw. an welchem die anderen, nachfolgend beschriebenen Komponenten angeordnet sind.

In dem Joch 110 sind eine Ankerbohrung 111 und eine Ankerkammer 145 ausgebildet. Die Ankerkammer 145 ist oben durch einen Magnetkern 120 verschlossen. In der Ankerkammer 145 ist ein Anker 140 angeordnet, welcher durch Verstemmen mit einer Ankerstange 150 verbunden ist.

Zwischen dem Magnetkern 120 und dem Anker 140 befindet sich eine Druckfeder 125, welche den Anker 140 vom Magnetkern 120 weg drückt. Seitlich zu der Ankerkammer 145 ist eine Wicklung 130 angeordnet, welche von einem Spulenkern 135 umgeben ist. Durch Anlegen eines Gleichstroms durch die Wicklung 130 kann auf den Anker 140 eine magnetische Kraft ausgeübt werden, welche der durch die Druckfeder 125 ausgeübten Kraft entgegengesetzt ist. Dies ermöglicht ein Auf- und Abbewegen des Ankers 140 zusammen mit der Ankerstange 150 durch An- und Abschalten des Gleichstroms durch die Wicklung 130.

Benachbart zum dem Anker 140 gegenüberliegenden Ende der Ankerstange 150 weist die Ankerstange einen Bund 152 auf, welcher radial nach außen absteht. Der Bund 152 ist in einer Vertiefung enthalten, welche in dem Joch 110 ausgebildet ist.

In dem in Figur 1 dargestellten Zustand sind der Anker 140, die Ankerstange 150 und der Bund 152 in einer gemeinsamen oberen Position angeordnet. Diese Position wird gegen die Kraft der Druckfeder 125 mittels der von der Wicklung 130 vermittelten Magnetkraft erreicht. Es sei verstanden, dass sich beim Abschalten des durch die Wicklung 130 fließenden Gleichstroms der Anker 140, die Ankerstange 150 und der Bund 152 gemeinsam nach unten in eine gemeinsame untere Position bewegen.

Am unteren Ende der Ankerstange 150 ist ein Verstemmring 160 angeordnet, welcher mit der Ankerstange 150 verstemmt ist. Damit ist der Verstemmring 160 fest mit der Ankerstange 150 verbunden.

Zwischen dem Bund 152 und dem Verstemmring 160 ist eine Mäanderfeder 200 angeordnet. Die Mäanderfeder 200 wird dabei von dem Bund 152 und dem Verstemmring 160 jeweils unmittelbar kontaktiert, so dass sie zwischen dem Bund 152 und dem Verstemmring 160 fest eingespannt ist. Sie bewegt sich somit mit der oben beschriebenen Bewegung zwischen oberer Position und unterer Position mit. Anders ausgedrückt kann auch die Mäanderfeder 200 mittels der Wicklung 130 kontrolliert auf- und abbewegt werden.

In dem Joch 110 sind ferner zwei Leitungen 112 sowie eine Ventilkammer 116 ausgebildet. Die Ventilkammer 116 weist zwei Austrittsöffnungen 114 auf, an welchen die Leitungen 112 beginnen. Die Ventilkammer 116 weist ferner einen Einlass 118 auf, durch welchen ein zu steuerndes Medium, beispielsweise ein Hydrauliköl, in die Ventilkammer 116 eintreten kann.

Wie in Figur 1 zu sehen ist weist die Mäanderfeder 200 einen außenliegenden Dichtbereich auf, welcher in dem dargestellten oberen Zustand die beiden Austrittsöffnungen 114 verschließt. Somit kann in diesem Zustand ein durch den Einlass 118 eintretendes Medium nicht in die Leitungen 112 eintreten. Wird dagegen von dem Verbund aus Anker 140, Ankerstange 150, Bund 152, Verstemmring 160 und Mäanderfeder 200 die nicht dargestellte untere Position eingenommen, so werden die Austrittsöffnungen 114 von der Mäanderfeder 200 freigegeben. Dies ermöglicht es, dass ein durch den Einlass 118 in die Ventilkammer 116 eintretendes Medium durch die Austrittsöffnungen 114 in die Leitungen 112 eintritt. Somit kann der Fluss des Mediums gesteuert werden, wie dies einer typischen Funktionalität eines Magnetventils entspricht. Der Dichtbereich der Mäanderfeder 200 liegt dabei in der in Figur 1 gezeigten oberen Position mit einer gewissen Vorspannung zum Verschließen an den Austrittsöffnungen 114 an.

Beispielhafte Ausführungsformen der Mäanderfeder 200 werden nachfolgend mit Bezug auf die weiteren Figuren beschrieben.

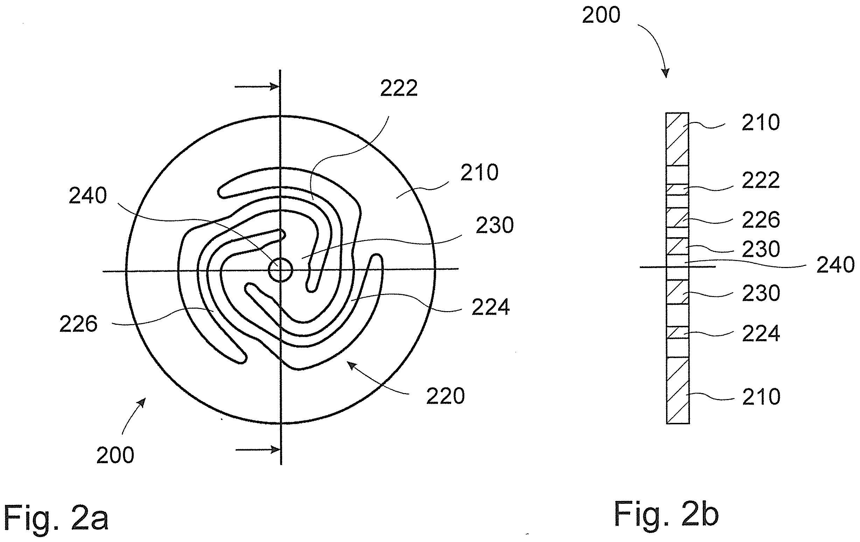

Figur 2a zeigt eine Mäanderfeder 200 gemäß einer nicht unter die Ansprüche fallenden, das Verständnis erleichternden Ausführungsform in einer Draufsicht. Figur 2b zeigt die Mäanderfeder 200 von Figur 2a in einer Seitenansicht.

Die Mäanderfeder 200 weist einen außenliegenden Dichtbereich 210 auf. Dieser ist dazu ausgebildet, bei Verwendung in einem Magnetventil, beispielsweise in einem Magnetventil 100 wie es in Figur 1 dargestellt ist, Öffnungen wie beispielsweise die in Figur 1 gezeigten Austrittsöffnungen 114 der Ventilkammer 116 zu verschließen.

Innenliegend zum Dichtbereich 210 ist ein Federbereich 220 angeordnet. Dieser weist drei spiralförmige Federarme auf, nämlich einen ersten Federarm 222, einen zweiten Federarm 224 und einen dritten Federarm 226. Die Federarme 222, 224, 226 laufen nach innen auf einen Innenring 230 zu, welcher innenliegend zu den Federarmen 222, 224, 226 angeordnet ist.

Der Innenring 230 weist eine Bohrung 240 auf. Mittels dieser Bohrung 240 kann die Mäanderfeder in geeigneter Weise befestigt werden, beispielsweise an einer Ankerstange eines Magnetventils 100, wie es in Figur 1 beispielhaft dargestellt ist.

Wird die Mäanderfeder 200 in der in Figur 1 dargestellten Einbausituation an dem Innenring 230 mittels der Ankerstange 150 nach oben bewegt, grenzt der Dichtbereich 210 ab einer gewissen Höhe an die Austrittsöffnungen 114 an und verschließt diese. Wird der Innenring 230 noch weiter nach oben gezogen, so wird dadurch Überhub erzeugt. Dies bedeutet, dass sich die Federarme 222, 224, 226 verbiegen und somit den Dichtbereich 210 mit einem Druck nach oben beaufschlagen. Dies verbessert die Dichtwirkung des an den Austrittsöffnungen 114 anliegenden Dichtbereichs 210.

Die Mäanderfeder 200 ist mittels Stanzen hergestellt. Dies ermöglicht die Herstellung mittels eines einfachen Bearbeitungsverfahrens in einem Schritt. Dementsprechend können die Kosten der Mäanderfeder und damit auch die Kosten eines Magnetventils, welches die Mäanderfeder enthält, gesenkt werden.

Wie insbesondere in Figur 2b zu erkennen ist, weist die Mäanderfeder 200 gemäß der dargestellten Ausführungsform eine glatte Oberfläche auf. Diese Ausführung kann beispielsweise dadurch erreicht werden, dass die Mäanderfeder aus einem flachen, glatten Stück Material ausgestanzt wird. Sofern dabei keine speziellen Maßnahmen getroffen werden, um die Oberfläche zu strukturieren, verbleibt die glatte Oberfläche als solche in der ausgestanzten Mäanderfeder.

Die Ausführung mit einer glatten Oberfläche ist insbesondere dann sinnvoll, wenn jeweilige zu verschließende Austrittsöffnungen 114 eine Dichtkontur aufweisen, welche die Dichtigkeit bei anliegendem Dichtbereich 210 sicherstellen.

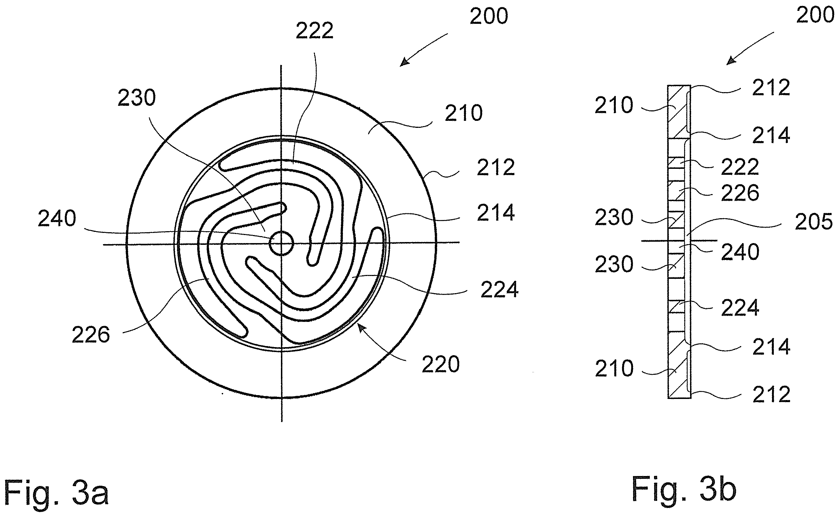

Figur 3a zeigt eine Mäanderfeder 200 gemäß einem Ausführungsbeispiel der Erfindung in einer Draufsicht. Figur 3b zeigt die Mäanderfeder 200 von Figur 3a in einer Seitenansicht.

Bezüglich der meisten Details der Mäanderfeder 200 gemäß dem zweiten Ausführungsbeispiel wird auf die obige Beschreibung von Figuren 2a und 2b verwiesen. Nachfolgend wird lediglich auf die Unterschiede eingegangen.

Wie insbesondere in Figur 3b zu erkennen ist, weist die Mäanderfeder 200 gemäß dem Ausführungsbeispiel keine glatte Oberfläche auf. Vielmehr sind seitlich an dem Dichtbereich 210 eine erste Dichtlippe 212 und eine zweite Dichtlippe 214 angeordnet. Die erste Dichtlippe 212 ist dabei außenseitig angeordnet, während die zweite Dichtlippe 214 innenseitig angeordnet ist.

Die Dichtlippen 212, 214 sorgen für eine verbesserte Abdichtung im geschlossenen Zustand und sind insbesondere dann von Vorteil, wenn die Austrittsöffnungen 114, welche mittels der Mäanderfeder 200 verschlossen werden sollen, nicht strukturiert sind.

Innenliegend zum Dichtbereich 210 weist die Mäanderfeder 200 gemäß dem Ausführungsbeispiel ferner eine Ausnehmung 205 auf. Diese ist dergestalt ausgebildet, dass die Federarme 222, 224, 226 sowie der Innenring 230 im Vergleich zur zweiten Dichtlippe 214 zurückgesetzt sind.

Auch die Mäanderfeder 200 gemäß dem Ausführungsbeispiel ist mittels Stanzen hergestellt. Gleichzeitig wurden jedoch Drückelemente verwendet, welche den Dichtbereich 210 zwischen den beiden Dichtlippen 212, 214 eindrücken und ferner auch den Bereich der Ausnehmung 205 innenliegend zum Dichtbereich 210 eindrücken. Damit kann die gezeigte Struktur auch in einem Arbeitsgang hergestellt werden, so dass auf zusätzliche, aufwändige Bearbeitungsverfahren wie beispielsweise spanende Bearbeitung verzichtet werden kann.

## Patentansprüche

1. Verfahren zur Herstellung einer Mäanderfeder (200), wobei die Mäanderfeder (200) einen radial außenliegenden Dichtbereich (210) sowie eine Anzahl von radial innenliegenden Federarmen (222, 224, 226) aufweist, wobei die Mäanderfeder (200) ausgestanzt wird und der Dichtbereich (210) während des Stanzvorgangs pressend und/oder formgebend strukturiert wird.

2. Verfahren nach Anspruch 1, **dadurch gekennzeichnet, dass** die Mäanderfeder (200) nach dem Stanzen vergütet wird und/oder der Dichtbereich (210) während des Stanzvorgangs so strukturiert wird, dass er eine randseitige Dichtkontur (212, 214) erhält.

3. Mäanderfeder (200), welche mittels eines Verfahrens nach einem der vorhergehenden Ansprüche hergestellt wurde.

4. Mäanderfeder (200) nach Anspruch 3, **dadurch gekennzeichnet, dass** die Mäanderfeder (200) entlang einiger oder aller Kanten Stanzkanten aufweist.

5. Mäanderfeder (200) nach Anspruch 3 bis 4, **dadurch gekennzeichnet, dass** diese eine konstante Materialstärke aufweist.

6. Mäanderfeder (200) nach Anspruch 3 bis 5, **dadurch gekennzeichnet, dass** die Mäanderfeder (200) einen Innenring (230) aufweist, auf welchen die Federarme (222, 224, 226) radial innen zulaufen und welcher eine Bohrung (240) zum Anbringen der Mäanderfeder (200) an einer Halterung aufweist und/oder die Federarme (222, 224, 226) im Wesentlichen spiralförmig angeordnet sind und/oder die Mäanderfeder (200) drei, vier, fünf oder mehr als fünf Federarme (222, 224, 226) aufweist.

7. Mäanderfeder (200) nach einem der Ansprüche 3 bis 6, **dadurch gekennzeichnet, dass** die Federarme (222, 224, 226) eine jeweilige Breite aufweisen, welche größer oder gleich ihrer Dicke ist.

8. Mäanderfeder (200) nach einem der Ansprüche 3 bis 7, **dadurch gekennzeichnet, dass** Zwischenräume zwischen den Federarmen (222, 224, 226) eine jeweilige Breite aufweisen, welche größer oder gleich der Dicke der Federarme (222, 224, 226) ist.

9. Mäanderfeder (200) nach einem der Ansprüche 3 bis 8, **dadurch gekennzeichnet, dass** diese aus einem weichen Federstahl hergestellt ist und die Federarme (222, 224, 226) und/oder Zwischenräume zwischen den Federarmen (222, 224, 226) eine jeweilige Breite aufweisen, welche mindestens 90 % der Dicke der Federarme (222, 224, 226) beträgt.

10. Mäanderfeder (200) nach einem der Ansprüche 3 bis 9, **dadurch gekennzeichent, dass** die Federarme (222, 224, 226) derart konstruiert sind, dass über den Verlauf eines jeweiligen Federarms (222, 224, 226) eine gleichmäßige Belastung bei einem auf den Dichtbereich (210) ausgeübten Überhub auftritt.

11. Mäanderfeder (200) nach einem der Ansprüche 3 bis 10, **dadurch gekennzeichnet, dass** der Dichtbereich (210) von umlaufenden Dichtlippen (212, 214) begrenzt ist, wobei die Dichtlippen (212, 214) bevorzugt mittels Tiefziehen und/oder Pressen bzw. Kaltverformung ausgebildet sind.

12. Mäanderfeder (200) nach einem der Ansprüche 3 bis 11, **dadurch gekennzeichnet, dass** der Dichtbereich (210) als umlaufender Dichtring ausgebildet ist.

13. Magnetventil (100), aufweisend
- ein Joch (110),
- einen Magnetkern (120),
- einen Anker (140),
- eine Wicklung (130), welche einen den Anker (140) aufnehmenden Ankerraum (145) zumindest teilweise umgibt,
- eine Ankerstange (150), welche ein erstes Längsende und ein zweites Längsende aufweist,
- wobei die Ankerstange (150) an ihrem ersten Längsende mit dem Anker (140) verbunden ist, und der Anker (140) zusammen mit der Ankerstange (150) mittels der mit elektrischem Strom beaufschlagbaren Wicklung (130) zwischen zumindest einer geschlossenen Endpositionen und einer offenen Endposition des Magnetventils (100) bewegbar ist, sowie
- eine Ventilkammer (116) mit zumindest einem Einlass (118) und zumindest einem Auslass (114),
**dadurch gekennzeichnet, dass**
auf der Ankerstange (150) eine Mäanderfeder (200) nach einem der Ansprüche 3 bis 12 derart aufgebracht ist, dass sie sich mit der Ankerstange (150) bewegt, und dass sie in der geschlossenen Endposition den Auslass (114) verschließt und in der offenen Endposition den Auslass (114) freigibt.

14. Magnetventil (100) nach Anspruch 13, **dadurch gekennzeichnet, dass** dem Dichtbereich (210) der Mäanderfeder (200) ein den Auslass (114) umgebendes Gegenstück zugeordnet ist, welches eine Dichtkontur aufweist.

15. Magnetventil (100) nach einem der Ansprüche 13 bis 14, **dadurch gekennzeichnet, dass** eine Dichtkontur angedreht oder geformt ist, oder die Dichtkontur umlaufende Dichtlippen (212, 214) aufweist; oder die Mäanderfeder (200) flach oder in sich eben ausgebildet ist.

## Claims

1. Method for the fabrication of a meander spring (200), wherein the meander spring (200) has a radially outward seal area (210) as well as a number of radially inward spring arms (222, 224, 226), wherein the meander spring (200) is punched out, and the seal area (210) is structured during the punching process in a pressing and/or shaping manner.

2. The method according to claim 1, **characterized in that** the meander spring (200) is finished after punching, and/or the seal area (210) is structured during the punching process such that it receives a seal contour (212, 214) at its edge.

3. Meander spring (200) fabricated according to a method of any one of the preceding claims.

4. The meander spring (200) according to claim 3, **characterized in that** the meander spring (200) has punched edges along some or all edges.

5. The meander spring (200) according to any one of the claims 3 to 4, **characterized in that** its material thickness is constant.

6. The meander spring (200) according to any one of the claims 3 to 5, **characterized in that** the meander spring (200) has an inner ring (230) toward which the spring arms (222, 224, 226) run radially inward, and which has a bore hole (240) for arranging a meander spring (200) at a holding device, and/or the spring arms (222, 224, 226) are arranged essentially like a spiral, and/or the meander spring (200) has three, four, five or more than five spring arms (222, 224, 226).

7. The meander spring (200) according to any one of the claims 3 to 6, **characterized in that** the spring arms (222, 224, 226) each have a width that is larger than its thickness or equals it.

8. The meander spring (200) according to any one of the claims 3 to 7, **characterized in that** spaces between the spring arms (222, 224, 226) each have a width that is larger than the thickness of the spring arms (222, 224, 226) or equals it.

9. The meander spring (200) according to any one of the claims 3 to 8, **characterized in that** the meander spring is manufactured from soft spring steel, and the spring arms (222, 224, 226) and/or the spaces between the spring arms (222, 224, 226) each have a width that is at least 90 % of the thickness of the spring arms (222, 224, 226).

10. The meander spring (200) according to any of the claims 3 to 9, **characterized in that** the spring arms (222, 224, 226) are constructed such that over the course of a respective spring arm (222, 224, 226) an even load occurs when an overstroke is applied on the seal area (210).

11. The meander spring (200) according to any one of the claims 3 to 10, **characterized in that** the seal area (210) is bordered by circumferential sealing lips (212, 214), wherein the sealing lips (212, 214) preferably are formed by means of deep drawing and/or pressing or cold forming.

12. The meander spring (200) according to any one of the claims 3 to 11, **characterized in that** the seal area (210) is configured as a circumferential seal ring.

13. Magnetic valve (100) having
- a yoke (110),
- a magnetic core (120),
- an armature (140),
- a winding (130), at least partially surrounding an armature space (145) that receives the armature (140),
- an armature rod (150) with a first longitudinal end and a second longitudinal end,
- wherein the armature rod (150) is connected with its first longitudinal end to the armature (140), and the armature (140) can move along with the armature rod (150) by means of the winding (130), that can exposed to current, between at least one closed end position and one open end position of the magnetic valve (100), as well as
- a valve chamber (116) with at least one inlet (118) and at least one outlet (114), **characterized in that** on the armature rod (150) a meander spring (200) according to any one of the claims 3 to 12 is applied such that it moves along with the armature rod (150), and that in the closed end position it seals the outlet (114) and in the open end position releases the outlet (114).

14. The magnetic valve (100) according to claim 13, **characterized in that** a counter piece surrounding the outlet (114) is allocated to the seal area (210) of the meander spring (200), the counter piece having a sealing contour.

15. The magnetic valve (100) according to any one of the claims 13 to 14, **characterized in that** a sealing contour is lathed or formed, or the sealing contour has circumferential sealing lips (212, 214); or the meander spring (200) is configured flat or immanently plane.

## Revendications

1. Procédé de fabrication d'un ressort à méandres (200) de façon à ce que le ressort à méandres (200) comporte une zone d'étanchéité (210) extérieure selon la direction radiale et plusieurs bras élastiques (222, 224, 226) situés selon la direction radiale à l'intérieur et de façon à ce que le ressort à méandres est produit par découpage et à ce que la zone d'étanchéité (21) est structurée pendant le procédé de découpage par pression et/ou application d'une forme.

2. Procédé selon la revendication 1, **caractérisé en ce que** le ressort à méandres (200) est recuit après le découpage et/ou **en ce que** la zone d'étanchéité (210) est structurée durant le découpage de façon à ce qu'il reçoive au niveau de son bord un joint d'étanchéité (212, 214).

3. Ressort à méandres (200) réalisé selon le procédé d'une des revendications précédentes.

4. Ressort à méandres (200) selon la revendication 3, **caractérisé en ce que** le ressort à méandres (200) comporte des arrêtes de découpage le long de certains ou de tous les bords.

5. Ressort à méandres (200) selon les revendications 3 à 4, **caractérisé en ce qu'**il comporte une épaisseur de matériau constante.

6. Ressort à méandres (200) selon les revendications 3 à 5, **caractérisé en ce que** le ressort à méandres (200) comporte un anneau intérieur (230) vers lequel s'étendent les bras élastiques (222, 224, 226) selon une direction radiale et qui comporte un perçage (240) permettant de fixer le ressort à méandres (200) au niveau d'une fixation et/ou **en ce que** les bras élastiques (222, 224, 226) s'étendent essentiellement selon une forme de spirale et/ou **en ce que** le ressort à méandres (200) comporte trois, quatre, cinq ou plus de cinq bras élastiques (222, 224, 226).

7. Ressort à méandres (200) selon une des revendications 3 à 6, **caractérisé en ce que** les bras élastiques (222, 224, 226) possèdent chacun une largeur identique ou supérieure à son épaisseur.

8. Ressort à a méandres (200) selon une des revendications précédentes 3 à 7, **caractérisé en ce que** les espaces entre les bras élastiques (222, 224, 226) possèdent chacun une largeur identique ou supérieure à l'épaisseur des bras élastiques (222, 224, 226).

9. Ressort à méandres (200) selon une des revendications précédentes 3 à 8, **caractérisé en ce qu'**il est fabriqué en un acier à ressort souple et/ou **en ce que** les espaces entre les bras élastiques (222, 224, 226) comportent chacun une largeur d'au moins 90% de leur épaisseur.

10. Ressort à méandres selon une des revendications 3 à 9, **caractérisé en ce que** les bras élastiques (222, 224, 226) sont construits de façon à ce qu'un déplacement de la zone d'étanchéité (210) résulte en une charge constante le long de chacun des bras élastiques (222, 224, 226).

11. Ressort à méandres (200) selon une des revendications 3 à 10, **caractérisé en ce que** la zone d'étanchéité (210) est délimitée par des lèvres d'étanchéité circonférentielles (212, 214) de façon à ce que ces lèvres d'étanchéité (212, 214) sont fabriquées de préférence par emboutissage et/ou par pressage ou par déformation à froid.

12. Ressort à méandres (200) selon une des revendications 3 à 11, **caractérisé en ce que** la zone d'étanchéité (210) est configurée comme un anneau d'étanchéité.

13. Soupape magnétique comportant :
- une culasse (110)
- un noyau magnétique (120)
- un induit (140)
- un enroulement (130) entourant au moins partiellement l'espace d'induit (145) recevant l'induit (140),
- une tige d'induit (150) comportant une première extrémité et une deuxième extrémité,
- de façon à ce que la tige d'induit (150) est liée par sa première extrémité à l'induit (140) et à ce que l'induit (140) en combinaison avec la tige d'induit (150) et avec l'enroulement (130) parcouru par un courant électrique peut être déplacée entre une position fermée en fin de course et une position ouverte en fin de course de la soupape magnétique (100)
- et une chambre de soupape (116) avec au moins une entrée (118) et au moins une sortie (114).

14. Soupape magnétique (100) selon la revendication 13, **caractérisé en ce que** la zone d'étanchéité (210) du ressort à méandres (200) correspond à un contre-élément comportant un contour d'étanchéité et entourant la sortie (114).

15. Soupape magnétique (100) selon une des revendications 13 à 14, **caractérisé en ce qu'**un contour d'étanchéité est réalisé par fraisage ou par déformation ou **en ce que** le contour d'étanchéité comporte des lèvres d'étanchéité circonférentielles (212, 214) ou **en ce que** le ressort à méandres (200) possède une forme plate ou soit lui-même plat.
